Europäisches Patentamt

European Patent Office

Office européen des brevets

(11) Publication number: 0 438 642 A1

# EUROPEAN PATENT APPLICATION

(21) Application number: 90120117.8

(22) Date of filing: 19.10.90

(51) Int. Cl.⁵: F16J 15/32, B29C 45/40

(30) Priority: 19.12.89 IT 5356389

(43) Date of publication of application:
31.07.91 Bulletin 91/31

(84) Designated Contracting States:
DE ES FR GB SE

(71) Applicant: RFT S.p.A.
Via Bricherasio, 12
I-10100 Torino(IT)

(72) Inventor: Berti, Franco
Viale Valganna 84
I-21100 Varese(IT)

(74) Representative: Jorio, Paolo et al
STUDIO TORTA Società Semplice Via Viotti 9
I-10121 Torino(IT)

(54) A seal adapted to be produced by moulding.

(57) A seal (1) consists of a moulded annular element provided on its circumferential lateral edge (8,9,10) or on a portion thereof, in a region not having a sealing function, with a continuous or interrupted projection (25) having a substantially saw-tooth shape and formed of elastomeric material adapted to snap-fix the seal (1) to a respective mould part (2) for the production thereof.

Fig. 1

EP 0 438 642 A1

## A SEAL ADAPTED TO BE PRODUCED BY MOULDING

The present invention relates to a seal, in particular a seal of the type employed to screen rolling element bearings.

Seals of the said type are usually composed of an elastomeric element securely and intimately connected to a reinforcement insert, which is usually rigid and made of metal or synthetic plastics material, and are obtained by moulding using any known method, for example injection, compression or transfer moulding, by means of the use of a composite mould having two or more mould parts which, once the seal is formed, are separated from one another to open the mould and release the seal itself.

Upon separation of the mould parts the seal just formed may remain adherent to any one of these, notwithstanding the use of chemical release agents, by the affect of the adhesion which develops between rubber parts and walls of the mould parts; since such seals are usually very small and light this problem cannot be overcome by performing the moulding with horizontal mould parts in that the mass of the seal is insufficient to ensure that it remains or, at least, falls onto the lower mould half when the mould is opened. On the other hand, on the hypothesis that it is desired to effect moulding in an automatic manner, it is extremely important to be able to determine beforehand on which mould part the seal just formed will be found upon opening of the mould.

The object of the invention is that of providing a seal of the type which can be made by moulding between two or more mould parts, which has a conformation such as to make it possible to determine with certainty that it will remain on a predetermined mould part when these are separated.

The said object is achieved by the invention, which relates to a seal, in particular for a rolling element bearing, of the type adapted to be produced by moulding between at least a pair of mould parts, characterised by the fact that it includes a circumferential lateral edge provided, on at least one portion thereof and in a region not having a sealing function, with a radial projection formed in elastomeric material, the said projection being adapted to snap-fix the seal to a first of the said mould parts to maintain the seal positioned on it upon separation of the mould parts.

For a better understanding of the invention there is now given a non-limitative description of an embodiment, with reference to the attached drawing, in which:

Figure 1 is a radial section of a seal formed according to the invention;

Figure 2 is a radial section of a variant of the seal of Figure 1;

Figure 3 is a radial section of a second embodiment of the seal formed according to the invention; and

Figure 4 is a radial section of a variant of the seal of Figure 3.

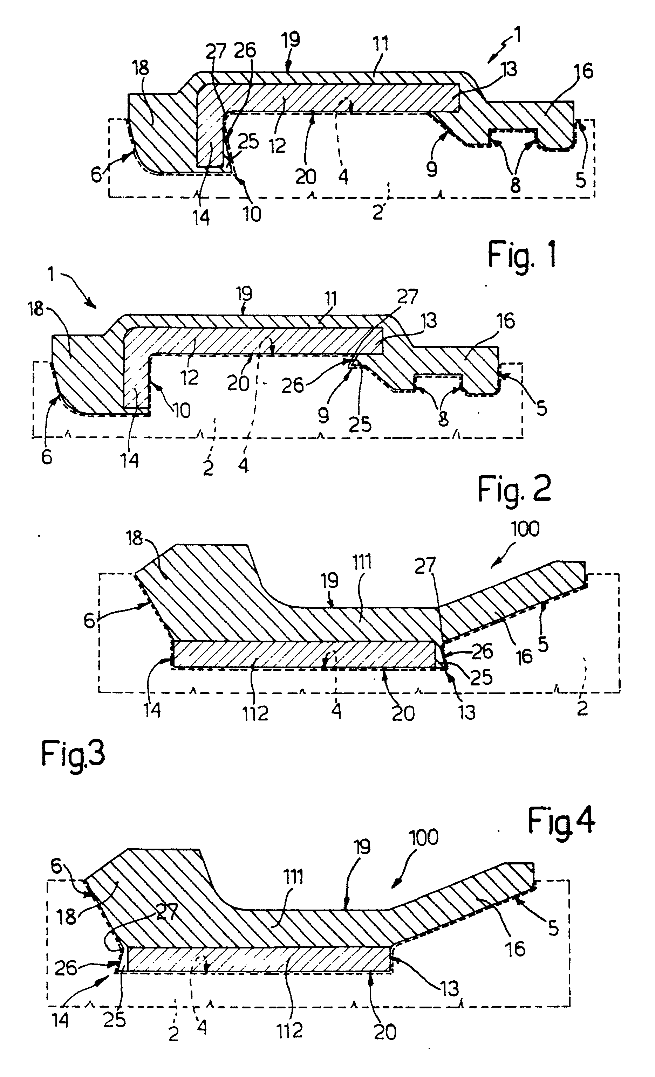

With reference to Figure 1 the reference numeral 1 generally indicates a seal, in particular a seal adapted to be mounted on rolling element bearings, of the type adapted to be produced by moulding between two or more mould parts, of which only a lower mould part 2 is illustrated for simplicity, forming overall, when they are closed, a known mould, not illustrated for simplicity, within the interior of which the seal 1 can be obtained starting from a crude elastomeric mixture with any known moulding method, for example by injection, compression or transfer.

The seal 1 is annular and has, in a radial sense, a profile of complex shape which matches the profile of respective forming recesses 4 of the said mould parts, of which only that of the mould part 2 is illustrated for simplicity; because of its complex profile the annular seal 1 is delimited by a series of circumferential lateral edges including not only respective opposite respectively inner and outer terminal opposite edges 5 and 6, but also a series of intermediate edges 8, 9, 10 delimiting respective adjacent annular portions of different thickness of the seal 1. This, in the non-limitative specific example illustrated, comprises an elastomeric element 11 and a reinforcing insert 12 of metal or other relatively rigid material, which is securely fixed by co-moulding to the elastomeric element 11, in which it is in part embedded; in the specific example illustrated the insert 12 is stamped in such a way as to present a flat radially inner terminal edge 13 and a bent L-shape radially outer terminal edge 14 facing towards the lower mould part 2.

Between the edges 5 and 13 and 6 and 14 are delimited respective sealing portions 16, 18 of the seal 1, composed entirely of the elastomeric element 11; this also defines an upper face 19 of the seal 1 opposite a lower face 20 on which the edges 8, 9, 10 form respective annular contours.

According to the invention, at least one of the circumferential lateral edges 8, 9, 10 is provided, on at least one portion thereof and in the region not having a sealing function (so that this excludes the use of the circumferential terminal edges 5, 6) with a radial projection 25 formed in elastomeric material; in the specific example the projection 25 is formed on the edge 10 which extends towards the radially inner edge 5 and has a continuous annular shape with circumferentially spaced sections; the projection 25 is shaped in such a way as to be able to snap-fix the seal 1 to the mould 2 by cooperation with the profile 4 of this latter; in this way the projection 25 is adapted to maintain the seal 1 positioned meohanically with certainty on the mould part 2 upon opening of the mould in which the seal 1 itself is formed.

The radial projection 25 has a height (or rather a radial extent) decreasing gradually as it approaches the face 20; in particular, it has in radial section a saw-tooth form and is formed in the immediate proximity of one of the terminal edges of the reinforcing insert 12, in the specific example in correspondence with a radially inner lateral surface of the L-shape edge 14 of the insert 12, in such a way as to be disposed in a region of the seal 1 which is not very flexible. The radial projection 25 is moreover shaped in such a way as to have its inclined lateral surface 26 facing towards the immediately adjacent face of the reinforcing insert 12 which defines a part of the lower face 20 of the seal 1 so as to delimit with this latter a radial lateral concavity 27. In any case, for the purposes of the invention it is sufficient that the radial projection 25 should have an extent in a radial direction of the order of only several tenths of a millimetre in relation to a diameter of the seal 1 of the order of tens of millimetres; therefore its shape illustrated in the drawing attached is not to scale (being able to be measured in reality even less than a tenth) and must be understood to be suitably amplified for a better illustration of the characteristics of the invention.

With reference to the variant of Figure 2, where similar or identical details to those already described are indicated for simplicity with the same reference numerals, the seal 1 can be provided with a projection 25 also in correspondence with the edge 9, opposite and facing the edge 10; in this case the projection 25 has a smaller extent in an axial sense and projects radially outwardly rather than inwardly, retaining in any case the same functionality as that of the example of Figure 1.

With reference to Figures 3 and 4, in these are illustrated respective corresponding radial sections of two variants of a seal 100 of a different model from that of Figure 1, but still made according to the invention; the similar or identical details to those already described are indicated for simplicity with the same reference numerals. In particular the seal 100 is of the flat type and includes a flat insert 112 and an elastomeric element 111 connected fixedly to it by co-moulding and provided with respective opposite seal portions 16, 18 delimited by respective lateral edges 5, 6 of the seal 100; in this model the radial projection 25 is formed in such a way as to clad laterally one of the terminal lateral edges of the insert 112, namely the radially outer edge 14 in the variant of Figure 4 and the radially inner edge 13 in the variant of Figure 3 respectively; in both cases the projection 25 is delimited by an inclined lateral surface 26 facing towards one of the respective sealing portions 16, 18 for the elastomeric element 111 and delimiting with it a radial annular concavity 27. In this case also the function of the projection 25 is the same, this being adapted to cooperate mechanically with the profile 4 of a respective mould part 2 to which it is desired to maintain the seal 100 attached during opening of the mould of which the mould part 2 forms part.

From what has been described the advantages connected with the invention will be evident; the presence of the radial projection 25 which forms an undercut with the immediately adjacent seal portion 1 (face 20 or sealing portions 16, 18) makes it possible to secure, but at the same time in a releasable manner (in that the projection 25 is formed in elastomeric material and is therefore deformable) the seal 1 to a chosen one of the mould parts of the forming mould thereof (to that the recess 4 of which will be in cooperation with the projection 25); in this way not only is it possible to know beforehand on which mould part the seal just formed will be found upon opening of the forming mould, but this seal 1 can be mechanically attached to this mould part by a sufficiently great force (thanks to the particular position chosen for the projection 25 close to one of the edges 13, 14) as to permit also the performance on the seal 1 of finishing operations, for example a mechanical trimming, whilst the seal 1 is retained in a certain position fixed on the mould part 2; this makes it possible to extend considerably the operating life of the moulds for forming the seals with a considerable economic and technological saving. At the end of the operations the seal can be removed from the mould part 2 with a manipulator by means of the action of a mechanical extractor, for example having a punch or tip, of known type not illustrated for simplicity, with which the mould part 2 may be already provided; such extractor applies an axial stress to the seal sufficient to deform the projection 25 which thus ceases to cooperate by shape with the shape of the recess 4 releasing the seal 1.

## Claims

1. A seal, in particular for rolling element bearings, of the type adapted to be produced by moulding between at least a pair of mould parts, characterised by the fact that it includes a circumferential lateral edge provided on at least one portion thereof and in a region not having a sealing function, with a radial projection formed of elastomeric material, the said projection being adapted to snap-fix the seal to a first of the said mould parts to maintain the seal in position on it upon separation of the mould parts.

2. A seal according to Claim 1, characterised by the fact that the said radial projection has in radial section a saw-tooth form, and by the fact that the radial projection has an annular shape.

3. A seal according to Claim 2, characterised by the fact that the said annular radial projection is composed of a plurality of sections separated from one another.

4. A seal according to any preceding Claim, of the type including a reinforcement insert fixedly connected to an elastomeric element, characterised by the fact that the said radial projection is formed in the immediate proximity of a terminal edge of the said reinforcement insert.

5. A seal according to Claim 4, characterised by the fact that the said radial projection is formed in such a way as laterally to clad the said terminal edge of the reinforcement insert and to present an inclined surface facing towards a respective sealing portion of the elastomeric element.

6. A seal according to Claim 4, characterised by the fact that the said radial projection is formed in such a way as to present an inclined surface facing towards a face adjacent the said reinforcement insert.

7. A seal according to Claim 6, characterised by the fact that the said projection is formed in correspondence with a radially inner lateral surface of an L-shape folded edge of the said reinforcement insert.

8. A seal according to any preceding Claim, characterised by the fact that the said radial projection has an extent in a radial direction of the order of only several tenths of a millimetre or less.

Fig. 1

Fig. 2

Fig. 3

Fig 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 444 532 (SEIDL) <br> * Page 6, paragraph 4 - page 7, paragraph 2; figures 1-4 * <br> – – – | 1,2 | F 16 J 15/32 <br> B 29 C 45/40 |
| X | LES INDUSTRIES DES PLASTIQUES, vol. 4, no. 4, April 1948, pages 162-167, Paris, FR; M. BIORET: "Cours sur le moulage des thermodurcissables" <br> * Whole of page 162 * <br> – – – | 1 | |
| A | DE-A-1 485 656 (FUNCK) <br> * Page 16, paragraph 1 - page 17, paragraph 1; figures 7-9 * <br> – – – – – | 1 | |

TECHNICAL FIELDS SEARCHED (Int. Cl.5)

B 29 C

The present search report has been drawn up for all claims

| Place of search | Date of completion of search | Examiner |
|---|---|---|
| The Hague | 04 April 91 | LEGER M.G.M. |